# EUROPÄISCHE PATENTSCHRIFT

(11) **EP 2 470 782 B1**
(45) Veröffentlichungstag und Bekanntmachung des Hinweises auf die Patenterteilung: **16.12.2015**
(21) Anmeldenummer: 10745551.1
(22) Anmeldetag: 14.08.2010
(51) Int. Cl.: F03D 7/04

(54) **BETRIEBSFÜHRUNGSSYSTEM EINER WINDENERGIEANLAGE UND VERFAHREN UNTER VERWENDUNG DES BETRIEBSFÜHRUNGSSYSTEMS**
MANAGEMENT SYSTEM FOR OPERATING A WIND ENERGY PLANT AND METHOD USING THE MANAGEMENT SYSTEM
SYSTÈME DE RÉGULATION DE FONCTIONNEMENT D'ÉOLIENNE ET PROCÉDÉ METTANT EN OEUVRE CE SYSTÈME DE RÉGULATION DE FONCTIONNEMENT

(30) Priorität: 29.08.2009 DE 102009039340
(43) Veröffentlichungstag der Anmeldung: 04.07.2012
(73) Patentinhaber: Robert Bosch GmbH, 70469 Stuttgart (DE)
(72) Erfinder: SCHINDELE, Lothar, 71272 Renningen (DE); BUCHTALA, Boris, 75417 Muehlacker (DE); SCHNURR, Bernd, 97816 Lohr-Sendelbach (DE); VATH, Andreas, 63849 Leidersbach (DE)
(74) Vertreter: Thürer, Andreas
(86) Internationale Anmeldenummer: PCT/EP2010/005003
(87) Internationale Veröffentlichungsnummer: WO 2011/023308

(56) Entgegenhaltungen:
- EP-A1- 1 719 910
- EP-A2- 2 108 827
- WO-A1-2008/000265

## Beschreibung

Die Erfindung betrifft ein Betriebsführungssystem für eine Windenergieanlage mit mindestens einem Steuergerät und ein Verfahren unter Verwendung des Betriebsführungssystems. Das Betriebsführungssystem dient der Koordination von Komponentenmodulen der Windenergieanlage, die in der Lage sind, Belastungen zu reduzieren bzw. Schwingungen zu dämpfen, wobei eine Sensorik Daten der Betriebszustände der Komponentenmodule für das Betriebsführungssystem liefert.

Eine Windenergieanlage verfügt über eine Vielzahl von Sensoren, die teilweise das Windfeld prediktiv erfassen, Blattlasten analysieren, die Last einer Hauptwelle prüfen, Reaktionen einer Drehmomentspitze messen, den Getriebezustand überwachen und elektrische Größen des Generators des Frequenzumsetzers und des Netzes messen. Gleichzeitig bietet eine moderne Windenergieanlage eine Mehrzahl von Eingriffsmöglichkeiten in das Schwingungs- und Dämpfungsverhalten der Anlage durch beispielsweise ein Pitchantriebssystem, ein Azimuthantriebssystem, ein Bremssystem und aktive Drehmomentstützen sowie durch Steuerung des Frequenzumsetzer. Diese Aktoren können auf die Komponentenmodule wie Rotor, Getriebe, Antriebsstrang und/oder Generator einwirken, wobei das Gesamtverhalten der Windenergieanlage durch das Betriebsführungssystem koordiniert wird.

Ein Betriebsführungssystem einer Windenergieanlage wird in der Patentschrift WO-2008/000265 beschrieben.

Ein Problem herkömmlicher Betriebsführungssysteme besteht darin, dass sich Eigenschwingungen der unterschiedlichen Komponenten der Windenergieanlage aufschaukeln können und das ganze System außer Kontrolle gerät, so dass eine erhöhte Gefahr der Schädigung der Windenergieanlage auftreten kann.

Aufgabe der Erfindung ist es, ein Betriebsführungssystem anzugeben, das eine verbesserte Koordination zwischen Sensorik, Aktorik, Schwingungsdämpfungsmodulen und Komponentenmodulen ermöglicht. Außerdem ist es Aufgabe der Erfindung ein Verfahren unter Verwendung des Betriebsführungssystems zu schaffen, das Lasten reduziert, Schwingungen reduziert sowie rechtzeitig Gefahren einer Aufschaukelung von Schwingungen entgegenwirkt.

Gelöst wird diese Aufgabe mit dem Gegenstand der unabhängigen Ansprüche. Vorteilhafte Weiterbildungen der Erfindung ergeben sich aus den abhängigen Ansprüchen.

Erfindungsgemäß wird ein Betriebsführungssystem für eine Windenergieanlage mit mindestens einem Steuergerät und ein Verfahren unter Verwendung des Betriebsführungssystems geschaffen. Das Betriebsführungssystem dient der Koordination von Komponentenmodulen der Windenergieanlage, die in der Lage sind, Lasten zu reduzieren und Schwingungen zu dämpfen, wobei eine Sensorik Daten der Betriebszustände der Komponentenmodule für das Betriebsführungssystem liefert und eine Systemanalyse ermöglicht. Dazu werden reaktive Schwingungen bzw. Belastungen und/oder prediktive Vorhersagen von Schwingungen bzw. Belastungen der Windenergieanlage sowie prediktive Störgrößen erfasst und Module in dem Steuergerät aktiviert, wobei eine Aktorik Dämpfungsmaßnahmen bzw. Lastreduzierungsmaßnahmen an den Komponentenmodulen nach Maßgabe der Schwingungsdämpfungsmodule des Steuergeräts ausführt.

Dieses Betriebsführungssystem hat den Vorteil, dass reaktive Schwingungen bzw. Belastungen und/oder prediktive Vorhersagen von Schwingungen bzw. Belastungen der Windenergieanlage sowie prediktive Störgrößen frühzeitig erfasst und mit Hilfe der Aktorik Maßnahmen eingeleitet werden, welche die Windenergieanlage vor Schäden und Überlastung schützt und gleichzeitig eine verbesserte Energiegewinnung erreicht. Dazu besitzt die Windenergieanlage eine zentrale Steuerung, in der für die Schwingungsdämpfung bzw. Lastreduzierung relevante Signale zusammengeführt werden.

Die zentrale Steuerung besitzt Steuermodule für mehrere Aktoren, mit denen sich das Schwingungsverhalten bzw. Lastverhalten des Antriebsstrangs beeinflussen lässt. Zu diesen Aktoren gehören die Möglichkeit der Pitchverstellung, der Einzelblattpitchverstellung, des Eingreifens von Bremsvorrichtungen in den Antriebsstrang, eine aktive Drehmomentstütze, die am Getriebe wirkt und Dämpfungsmöglichkeiten eröffnet sowie eine elektronische Steuerung des Generators und Frequenzumformers. Dazu besitzt die zentrale Steuerung eine Logik, nach der ein bestimmter der zur Verfügung stehenden Aktoren für die Schwingungsdämpfung entweder ausgewählt wird oder eine Gruppe von Aktoren zur Schwingungsdämpfung aktiviert wird.

Dazu wirken die Sensoren mit einer Systemanalyse zusammen, die Schwingungsmuster und ihre Zuordnung zu geeigneten Aktoren mit deren Dämpfung ermöglicht, sowie eine Verknüpfung von Zustandsüberwachungen durch Auswahl eines Aktors je nach Abnutzung der Aktoren bzw. der Antriebsstrangelemente. Die Informationen werden in dem Betriebsführungssystem gebündelt und Einzelmaßnahmen zur Schwingungsdämpfung aus einer Systemanalyse abgeleitet.

Dazu liefert die Sensorik der Windenergieanlage mehrdimensionale Winkel- und/oder Beschleunigungssignale bzw. Moment- und/oder Kraftsignale an das Steuergerät. Dieses steuert die Dämpfung von Schwingungen bzw. Reduzierung von Lasten, verursacht von Wind, Turbulenzen, Netz und/oder Generator mittels der im System vorhandenen Aggregate, wie Pitch-System, Drehmomentstützen, Generatorlasten, Frequenzumrichtersteuerungen, Azimuthverstellung, torsionsdämpfenden Elementen im Antriebsstrang. Dabei wird von dem Betriebsführungssystem auch ein Verändern der typischen Formen von Eigenschwingung im Laufe der Zeit der Windenergieanlage überwacht und Rückschlüsse auf Verschleiß und Schädigung von Einzelkomponenten oder Komponentenmodulen und/oder Teilsystemen geschlossen. Mit Hilfe statistischer Methoden kann darüber hinaus aufgrund der Messergebnisse der Sensorik in Bezug auf bisherige Belastungen auf die Restlebensdauer der Windenergieanlage geschlossen werden.

Die Sensoren können erfassen und auch unterscheiden zwischen Schwingungen von Körperschall in der Windenergieanlage und mechanischen Biegeschwingungen oder Torsionsschwingungen der unterschiedlichen Komponentenmodule. Dabei reagiert das zentrale Steuergerät prediktiv und auch reaktiv, indem sowohl reaktive Schwingungen bzw. Lasten als auch prediktive Vorhersagen von Schwingungen bzw. Lasten für die Windenergieanlage erfasst und vorhandene Zustandsgrößen der Windenergieanlage benutzt und eingesetzt werden.

In einer weiteren Ausführungsform der Erfindung weist das Betriebsführungssystem mehrere Steuergeräte zur Koordination von Komponentenmodulen der Windenergieanlage mit Schwingungsdämpfungsmodulen bzw. Modulen auf, die in der Lage sind, Lasten zu reduzieren bzw. Schwingungen zu dämpfen. Diese Steuergeräte können untereinander kooperieren oder von einer zentralen Steuereinheit geführt werden.

Die Sensorik weist vorzugsweise Windfeldsensoren, Blattlastensensoren, Hauptwellenlastsensoren, Drehmomentsensoren, Betriebsstoffsensoren, Beschleunigungssensoren sowie Sensoren für elektrische Größen des Generators, des Frequenzumformers und des Netzes auf.

Ferner ist es vorgesehen, dass die Sensorik des Betriebsführungssystem mehrdimensionale Beschleunigungssensoren, Lagesensoren und/oder Winkelsensoren zur Erfassung der Betriebszustände der Komponentenmodule, zur Erfassung reaktiver Schwingungen und/oder prediktiver Vorhersagen von Schwingungen der Komponentenmodule der Windenergieanlage sowie zur Erfassung prediktiver Störgrößen aufweist.

Dazu kann die Windenergieanlage unterschiedliche Teilsysteme mehrerer Komponentenmodule aufweisen wie das Teilsystem eines Antriebsstrangs, wozu die Komponentenmodule der Hauptwelle, der Drehmomentstütze, des Getriebes sowie das Betriebsstoffsystem des Getriebes gehören können. Auf derartige Teilsysteme mehrerer Komponentenmodule kann das erfindungsgemäße Betriebsführungssystem Dämpfungsmaßnahmen bzw. Lastreduzierungsmaßnahmen verteilen, wobei zu den Komponentenmodulen der Rotor mit verstellbaren Rotorblättern und Rotornabe, der Antriebsstrang mit Hauptwelle, Getriebe und aktiver Drehmomentstütze, der Generator mit Frequenzumformer und der Azimuthantrieb gehören.

Das erfindungsgemäße Betriebsführungssystem verfügt sowohl über eine Kommunikation mehrerer Steuergeräte von Teilsystemen untereinander als auch über eine Kommunikation mit einem zentralen Steuergerät. Dabei können die Sensoren der Sensorik einzelnen Steuergeräten von Teilsystemen und/oder einem zentralen Steuergerät des Betriebsführungssystems zugeordnet sein.

Schließlich ist es vorgesehen, dass das Betriebsführungssystem Teilsysteme mit eigenständiger Dämpfungsfunktion aufweist und dass das Betriebsführungssystem eine Diagnoseeinrichtung zur Diagnose und Registrierung von Zustandsdaten von Komponenten, Komponentenmodulen und/oder Teilsystemen der Windenergieanlage aufweist.

Ein Verfahren unter Verwendung des Betriebsführungssystems weist nachfolgende Verfahrenschritte auf. Zunächst werden Daten der Betriebszustände der Komponentenmodule in Bezug auf reaktive Schwingungen bzw. Lasten und/oder prediktive Vorhersagen von Schwingungen bzw. Lasten der Windenergieanlage sowie in Bezug auf prediktive Störgrößen erfasst. Dann werden Aktoren zur Dämpfung bzw. Lastreduzierung von akuten oder vorhergesagten Schwingungszuständen bzw. Lastzuständen von Komponentenmodulen und/oder von Teilsystemen der Windenergieanlage aktiviert. Schließlich wird elektrische Energie unter Anpassung von Frequenz-, Strom- und Spannungsbedarf des nachgeschalteten Netzes generiert.

Bei Ausfall einer Schwingungsdämpfungsfunktion eines Teilsystems werden die Schwingungsdämpfungsfunktionen auf verbliebene Teilsysteme oder Komponentenmodule durch das Betriebsführungssystem verteilt. Mittels Änderungen des Schwingungsverhaltens eines Teilsystems können Beschädigungen an dem Teilsystem diagnostiziert werden. Außerdem werden die durch die Sensorik erfassten Zustandsgrößen eines Teilsystems einer Systemanalyse unterworfen, um frühzeitig Belastungsgrenzen der Komponentenmodule zu erkennen und zu vermeiden. Außerdem ist es vorgesehen, dass die durch die Sensorik erfassten Zustandsgrößen und Ergebnisse einer Systemanalyse einem Informationsmodul zugeführt werden, was den Vorteil hat, dass der Betriebszustand der Windenergieanlage ständig mitprotokolliert und zu Diagnose- und Auswertezwecken ausgelesen werden kann.

Die Erfindung wird nun anhand der nachfolgenden Figuren näher erläutert.
- Figur 1: zeigt ein schematisches Blockdiagramm eines Betriebsführungssystems gemäß einer Ausführungsform der Erfindung;
- Figur 2: zeigt eine schematische Ansicht einer offenen Gondel einer Windenergieanlage mit Sensorpunkten, an denen Zustandsgrößen von Komponentenmodulen für das Betriebsführungssystem erfasst werden;
- Figur 3: zeigt schematisch ein Federmassemodell des Hauptstranges einer Windenergieanlage;
- Figur 4: zeigt ein schematisches Blockdiagramm eines Teils des Betriebsführungssystems mit einem zentralen Steuergerät zur Schwingungsdämpfung;
- Figur 5: zeigt eine schematische Ansicht einer Windenergieanlage mit möglichen Sensoren zur Überwachung von unterschiedlichen Komponentenmodulen und Zustandsgrößen einer Windenergieanlage.

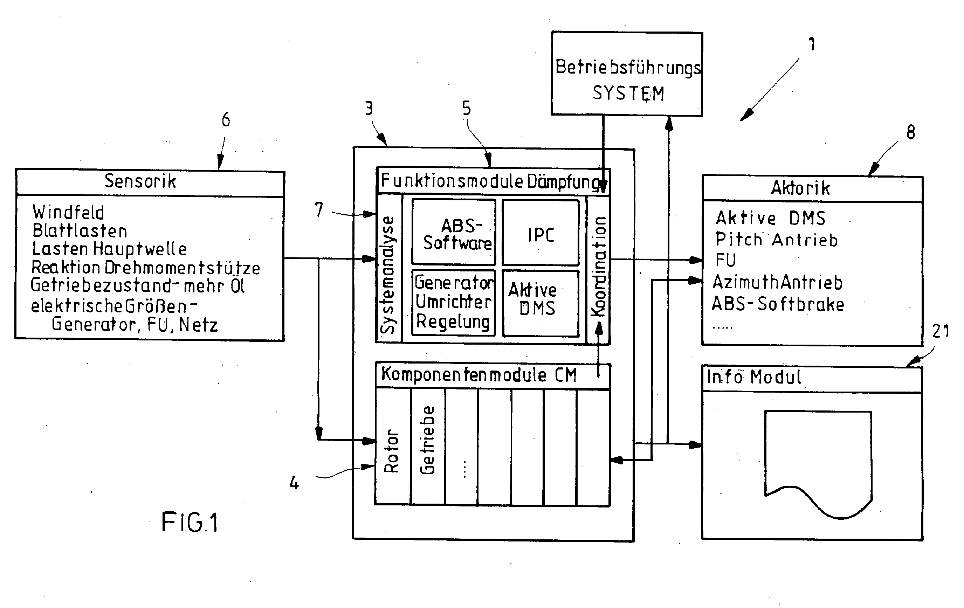

Figur 1 zeigt ein schematisches Blockdiagramm eines Betriebsführungssystems 1 gemäß einer Ausführungsform der Erfindung. Das Betriebsführungssystem 1 ermöglicht eine optimale Koordination zwischen Komponentenmodulen 4 und Schwingungsdämpfungsmodulen 5 einer Windenergieanlage. Dazu verfügen die Schwingungsdämpfungsmodulen 5 beispielsweise über eine ABS-Softbrake, über eine elektronische Regelung für den Generator und den Frequenzumrichter, über eine aktive Drehmomentstütze sowie über ein IPC-Modul. Diese Schwingungsdämpfungsmodule werden mit Hilfe des Betriebsführungssystems 1 mit den Komponentenmodulen 4 der Windenergieanlage derart koordiniert, dass ein Aufschaukeln von Eigenschwingungen in der Windenergieanlage auch bei extremen Windbedingungen derart gedämpft wird, dass die Windenergieanlage bei hoher Effizienz der Energiegewinnung arbeitet und nicht in Eigenschwingungszustände gerät.

Dazu verfügt die Windenergieanlage über eine umfangreiche Sensorik 6, mit der sowohl das Windfeld prediktiv gemessen wird als auch Blattlasten erfasst werden sowie die Lasten der Hauptwelle ermittelt werden. Auch die Reaktionen einer Drehmomentstütze können überwacht werden. Darüber hinaus kann der Betriebsmittelzustand des Getriebes erfasst werden, sowie elektrische Größen von Generator, Frequenzumwandler und Netz durch entsprechende Spannungs- und Stromsensoren erfasst werden. Durch die Koordination mit Hilfe des Betriebsführungssystems zwischen Schwingungsdämpfungsmodulen 5 und einer Aktorik 8 können die Komponentenmodule 4 wie Rotor mit Rotorblättern und Rotornabe, sowie Antriebsstrang mit Hauptwelle und Getriebe, sowie eventuell einer ABS-Bremse derart in ihren Schwingungseigenschaften beeinflusst werden, dass einerseits eine optimale Energieausbeute möglich wird und andererseits eine Beschädigung der Windenergieanlage selbst bei extremen Windverhältnissen nicht auftreten kann.

Dazu kann die Aktorik 8 über eine aktive Drehmomentstütze für das Getriebe, einen Pitchantrieb für die Rotorblätter, einen Frequenzumsetzer für die Umsetzung der Generatorfrequenz in eine geeignete Netzfrequenz sowie einen Azimuthantrieb zum Eindrehen des Rotors in eine optimale Windströmung und eine ABS-Softbrake, mit der ebenfalls dämpfend auf die Arbeitsweise der Windenergieanlage mit Hilfe des Betriebsführungssystems eingegriffen werden kann. Neben den Blöcken der Sensorik 6, der Aktorik 8 sowie der Schwingungsdämpfungsmodule 5 und der Komponentenmodule 4 weist das Betriebsführungssystem 1 noch einen Block zur Systemanalyse auf, mit dem Schwingungsmuster erkannt werden können und andere prediktive und reaktive Maßnahmen analysiert werden können. Darüber hinaus weist das Betriebsführungssystem noch ein Informationsmodul 21 auf, bei dem die unterschiedlichsten Zustandsgrößen der Komponentenmodule und der Schwingungsdämpfungsmodule 5 abgelegt und ausgewertet werden können.

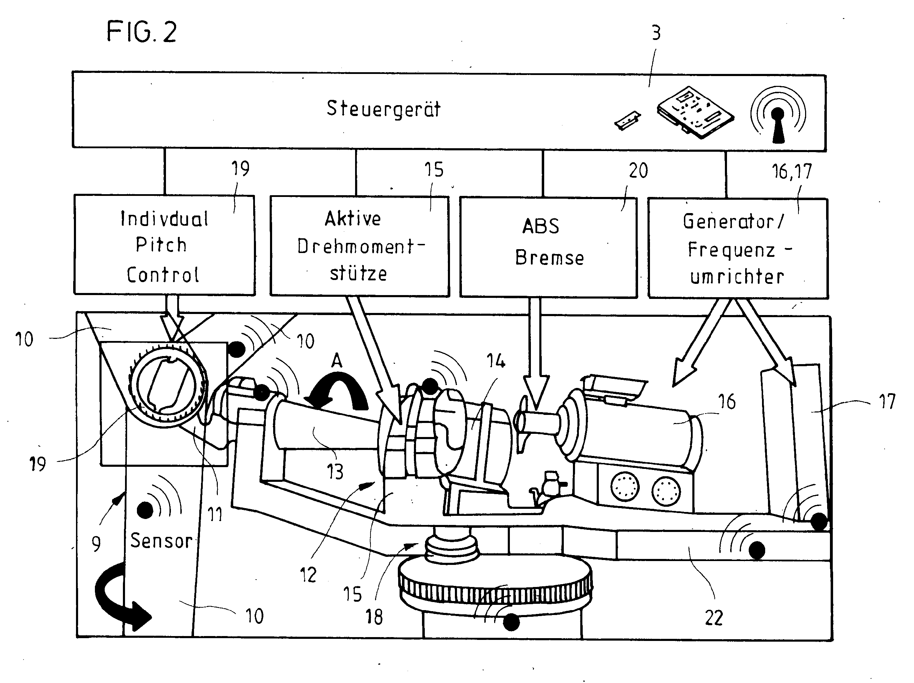

Figur 2 zeigt eine schematische Ansicht einer offenen Gondel 22 einer Windenergieanlage mit den Eingriffsmöglichkeiten eines Steuergerätes 3 über eine individuelle Pitchsteuerung 19, eine aktive Drehmomentstütze 15, eine ABS-Bremse 20 sowie über Generator/Frequenzumrichterkomponenten 16 und 17 zur Schwingungsdämpfung der Windenergieanlage. Dazu sind Punktsensoren an den unterschiedlichsten Überwachungsstellen innerhalb der Gondel angeordnet, die über Funk dem Steuergerät die einzelnen Zustandsgrößen der Komponentenmodule übermittelt.

Sensoren in Rotorblättern 10 können frühzeitig Lasten und Laständerungen erfassen und über die individuelle Pitchsteuerung 19 eine Dämpfung dadurch hervorgerufener Schwingungen ermöglichen. Auch die Drehbewegungen in Pfeilrichtung A der Hauptwelle 13 können Schwingungen hervorrufen, was teilweise durch eine aktive Drehmomentstütze 15 kompensiert werden kann, die das Getriebe 14 unterstützt. Von dem Getriebe 14 aus ist der Generator 16 über eine ABS-Bremse 20 an das Getriebe angekoppelt, wobei durch elektronische Regelung der Ströme und Spannungen sowohl im Generator als auch im Frequenzumrichter unter Belastung oder Entlastung des Netzes eine weitere Schwingungsdämpfung möglich wird.

Der Azimuthantrieb 18 sorgt dafür, dass der Rotor immer optimal zu dem Windfeld ausgerichtet wird, während andere Sensoren die Körperschwingungen der Gondel 22 erfassen.

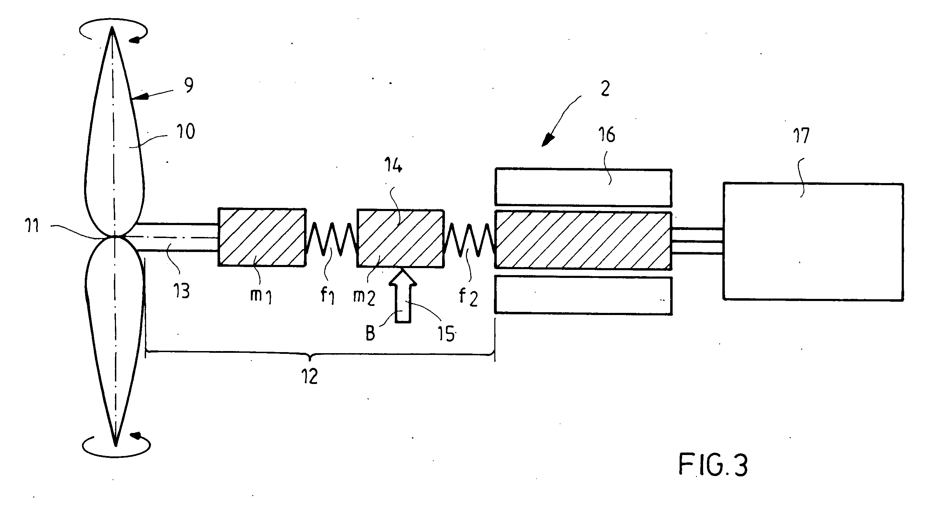

Figur 3 zeigt schematisch ein Federmassemodell des Hauptstranges 12 einer Windenergieanlage 2. Dieses Federmassemodell zeigt einerseits die Masse m1 der Hauptwelle 12, die mit der Torsionsfeder elastisch über f1 mit der Masse m2 des Getriebes 14 zusammenwirkt. Eine weitere Kopplung über ein federelastisches System wie eine tordierbare Welle zeigt die Verbindung zu dem Generator 16, die ebenfalls federelastisch mit einer Federkonstanten f2 an den Generator 16 ankoppelbar ist. Mit einem derartigen Federmassemodell lassen sich die Eigenschwingungen des Hauptantriebsstrangs berechnen und es können entsprechende Dämpfungsmaßnahmen beispielsweise mit Hilfe einer aktiven Drehmomentstütze 15, wie es die Pfeilrichtung B zeigt, gedämpft werden.

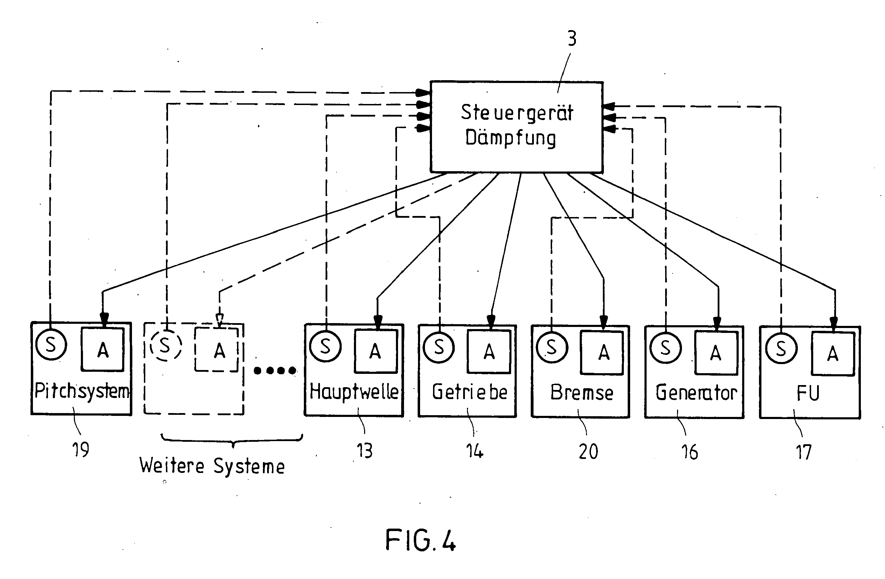

Figur 4 zeigt ein schematisches Blockdiagramm eines Teils des Betriebsführungssystems mit einem zentralen Steuergerät 3 zur Schwingungsdämpfung. Dazu sind an den einzelnen Komponentenmodulen wie der Hauptwelle 13, dem Getriebe 14, dem Generator 16, dem Frequenzumformer 17 sowie dem Pitchantriebssystem 19 und dem Bremssystem 22 entsprechende Sensoren angeordnet, die dem Steuergerät unterschiedliche Zustandsgrößen signalisieren, wobei das Steuergerät einen Zugriff auf entsprechende Aktoren A an den schwingfähigen Komponentenmodulen verfügt, um Dämpfungsmaßnahmen einzuleiten.

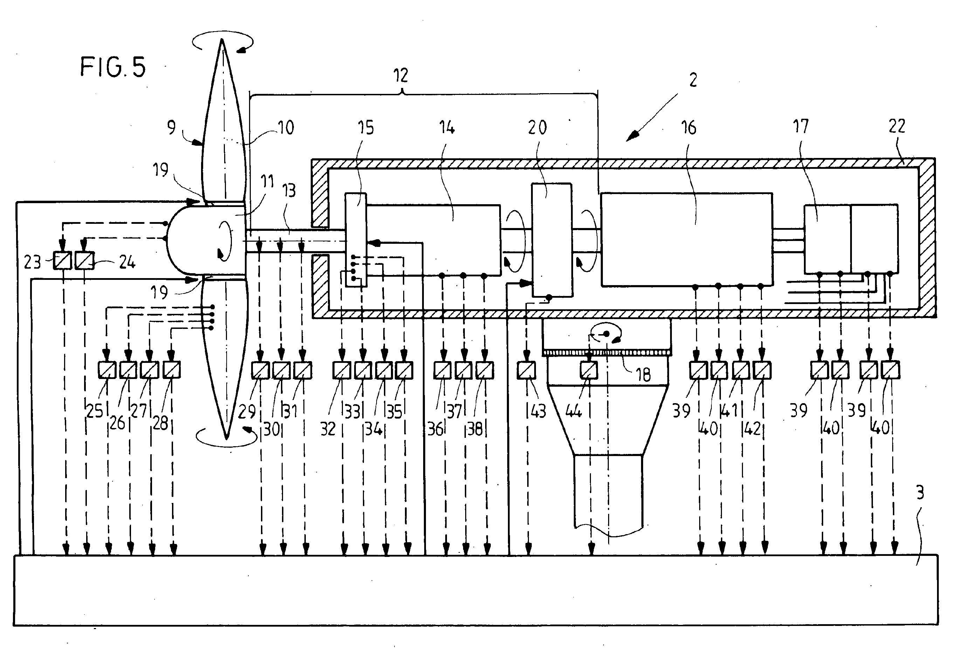

Figur 5 zeigt eine schematische Ansicht einer Windenergieanlage 2 mit möglichen Sensoren zur Überwachung von unterschiedlichen Hauptkomponentenmodulen und Zustandsgrößen der Windenergieanlage 2. So kann das Windfeld von der Rotornabe 11 aus mit einem Lidarsensor 23 oder einem Sensor 24 auf Lasertechnikbasis überwacht, und prediktiv können Störgrößen durch das Windfeld erfasst werden. Die Blattlasten können mittels Schwingungssensoren 25 auf piezzoelektronischer Basis oder mikromechanischer Basis oder durch Beschleunigungssensoren erfasst werden. Darüber hinaus können Kraftsensoren 26, Dehnungsmesssensoren 27 oder Drucksensoren 28 für die Ermittlung der Blattlasten vorgesehen sein. Die Hauptwelle kann mittels Torsionssensoren 29 sowie Dehnung-, Biegungs- oder Verlagerungssensoren 30 und entsprechenden Drehzahlsensoren 31 überprüft werden. Eine aktive Drehmomentstütze kann Drucksensoren 32, Kraftsensoren 33, Wegsensoren 34 oder Beschleunigungssensoren 35 aufweisen, um gezielt Dämpfungsmaßnahmen einzuleiten. Das Getriebe wiederum kann mit Körperschallsensoren 36 im Getriebe bzw. an Punkten, an denen für relevante Frequenzen eine Schwingungsüberhöhung auftreten könnte, z.B. an speziellen Punkten an der Gondelstruktur, ausgestattet sein.

Außerdem können am Getriebe Kraftsensoren 37 oder Dehnungsmessstreifen angebracht sein, um Zustandsgrößen des Getriebes zu ermitteln. Schließlich ist es mit einem Verlagerungssensor 38 weiterhin möglich, Schwingungsanormalitäten des Getriebes 14 zu ermitteln. Wenn eine ABS-Softbrake vorgesehen ist, kann auch diese mit einem entsprechenden Sensor 43 ausgestattet sein. Ein Positionssensor 44 kann für die Überwachung des Azimuthantriebs 18 der Gondel 22 vorgesehen werden. Der Generator 16 kann mittels eines Stromsensors 39 oder eines Spannungssensors 40 sowie über Drehmomentsensoren 41 und Drehzahlmesssensoren 42 in seinem Schwingungsverhalten überwacht werden. Weitere Stromsensoren 39 und Spannungssensoren 40 auf der Generatorund der Netzseite für die Überwachung der Windenergieanlage 2 vorgesehen sind. Diese Sensoren 23 bis 44 sind über entsprechende Messleitungen in dieser Ausführungsform der Erfindung mit einem zentralen Steuergerät 3 verbunden, das entsprechende Aktoren veranlasst wie z.B. das Pitchantriebssystem 19 des Rotors 9, das Bremssystem der ABS-Softbrake 20 oder durch aktive Drehmomentstützung 15 des Getriebes 14 einer Aufschaukelung von Schwingungen vorzubeugen.

### Bezugszeichenliste

- 1: Betriebsführungssystem
- 2: Windenergieanlage
- 3: Steuergerät
- 4: Komponentenmodul
- 5: Schwingungsdämpfungsmodul
- 6: Sensorik
- 7: Systemanalyse
- 8: Aktorik
- 9: Rotor
- 10: Rotorblatt
- 11: Rotornabe
- 12: Antriebsstrang
- 13: Hauptwelle
- 14: Getriebe
- 15: Drehmomentstütze
- 16: Generator
- 17: Frequenzumformer
- 18: Azimuthantrieb
- 19: Pitchantriebssystem
- 20: ABS-Softbrake
- 21: Informationsmodul
- 22: Gondel
- 23: Lidarsensor
- 24: Sensor auf Lasertechnikbasis
- 25: Schwingungssensor
- 26: Kraftsensor
- 27: Dehnungssensor
- 28: Drucksensor
- 29: Torsionssensor
- 30: Dehnungssensor
- 31: Drehzahlsensor
- 32: Drucksensor
- 33: Kraftsensor
- 34: Wegsensor
- 35: Beschleunigungssensor
- 36: Körperschallsensor
- 37: Kraftsensor
- 38: Verlagerungssensor
- 39: Stromsensor
- 40: Spannungssensor
- 41: Drehmomentsensor
- 42: Drehzahlsensor
- 43: Beschleunigungs- bzw. Bremssensor
- 44: Azimuthwinkelsensor

## Patentansprüche

1. Betriebsführungssystem einer Windenergieanlage (2) mit mindestens einem Steuergerät (3), das eine Koordination von Komponentenmodulen (4) bzw. Modulen zur Lastreduzierung der Windenergieanlage (2) mit Schwingungsdämpfungsmodulen (5) ermöglicht, wobei eine Sensorik (6) Daten der Betriebszustände der Komponentenmodule (4) für eine Systemanalyse (7) liefert, reaktive Schwingungen bzw. Belastungen und/oder prediktive Vorhersagen von Schwingungen bzw. Belastungen der Windenergieanlage (2), sowie prediktive Störgrößen erfasst und die Schwingungsdämpfungsmodule (5) in dem Steuergerät (3) aktiviert, und wobei eine Aktorik (8) Dämpfungsmaßnahmen bzw. Lastreduzierungsmaßnahmen an den Komponentenmodulen (4) nach Maßgabe der Schwingungsdämpfungsmodule (5) des Steuergeräts (3) ausführt,
**dadurch gekennzeichnet,**
**dass** das Betriebsführungssystem (1) eine Kommunikation mehrerer Steuergeräte von Teilsystemen untereinander als auch über ein zentrales Steuergerät (3) vorsieht, die Sensoren der Sensorik (6) einzelnen Steuergeräten von Teilsystemen und/oder dem zentralen Steuergerät (3) des Betriebsführungssystems (1) zugeordnet sind und das Betriebsführungssystem (1) Teilsysteme mehrerer Komponentenmodule (4) mit eigenständigen Dämpfungsfunktionen aufweist, auf welche das Betriebsführungssystem (1) Dämpfungsmaßnahmen bzw. Lastreduzierungsmaßnahmen verteilt, wobei zu den Teilsystemen
- der Rotor (9) mit verstellbaren Rotorblättern (10) und Rotornabe (11),
- der Antriebsstrang (12) mit Hauptwelle (13), Getriebe (14) und Drehmomentstütze (15),
- der Generator (16) mit Frequenzumformer (17) und/oder
- der Azimuthantrieb (18)
gehören.

2. Betriebsführungssystem nach Anspruch 1,
**dadurch gekennzeichnet,**
**dass** das Betriebsführungssystem (1) mehrere Steuergeräte zur Koordination von Komponentenmodulen (4) der Windenergieanlage (2) mit Schwingungsdämpfungsmodulen (5) bzw. Lastreduzierungsmodulen aufweist.

3. Betriebsführungssystem nach Anspruch 1 oder Anspruch 2,
**dadurch gekennzeichnet,**
**dass** die Sensorik (6) Windfeldsensoren, Blattlastensensoren, Hauptwellenlastsensoren, Drehmomentsensoren, Betriebsstoffsensoren, Beschleunigungssensoren sowie Sensoren von elektrischen Größen des Generators, des Frequenzumformers und des Netzes aufweist.

4. Betriebsführungssystem nach einem der vorhergehenden Ansprüche,
**dadurch gekennzeichnet,**
**dass** die Sensorik (6) des Betriebsführungssystems (1) mehrdimensionale Beschleunigungssensoren, Lagesensoren und/oder Winkelsensoren zur Erfassung der Betriebszustände der Komponentenmodule (4), reaktiver Schwingungen bzw. Lasten und/oder prediktiver Vorhersagen von Schwingungen bzw. Lasten der Komponentenmodule (4) der Windenergieanlage (2), sowie zur Erfassung prediktiver Störgrößen aufweist.

5. Betriebsführungssystem nach einem der vorhergehenden Ansprüche,
**dadurch gekennzeichnet,**
**dass** das Betriebsführungssystem (1) eine Diagnoseeinrichtung zur Diagnose und Registrierung von Zustandsdaten von Komponenten, Komponentenmodulen (4) und/oder Teilsystemen der Windenergieanlage (2) aufweist.

6. Betriebsführungssystem nach einem der vorhergehenden Ansprüche,
**dadurch gekennzeichnet,**
**dass** die Aktorik (8) eine aktive Drehmomentstütze (15), einen Pitchantrieb (19), einen Frequenzumformer (17), einen Azimuthantrieb (18) und/oder eine ABS-Softbrake (20) aufweist.

7. Verfahren unter Verwendung des Betriebsführungssystems (1) nach einem der vorhergehenden Ansprüche, wobei das Verfahren folgende Verfahrenschritte aufweist:
- Erfassen von Daten der Betriebszustände der Komponentenmodule (4) in Bezug auf reaktive Schwingungen bzw. Lasten und/oder prediktive Vorhersagen von Schwingungen bzw. Lasten der Windenergieanlage, sowie in Bezug auf prediktive Störgrößen;
- Aktivieren von Aktoren (8) zur Dämpfung und/oder Lastreduzierung von akuten oder vorhergesagten Schwingungszuständen von Komponentenmodulen (4) und/oder von Teilsystemen der Windenergieanlage (2);
- Generieren von elektrischer Energie unter Anpassung an Frequenz-, Strom- und Spannungsbedarf des nachgeschalteten Netzes;
**dadurch gekennzeichnet,**
**dass** bei Ausfall einer Schwingungsdämpfungsfunktion eines Teilsystems die Schwingungsdämpfungsfunktionen auf verbliebene Teilsysteme oder Komponentenmodule (4) verteilt werden, wobei zu den Teilsystemen
- der Rotor (9) mit verstellbaren Rotorblättern (10) und Rotornabe (11),
- der Antriebsstrang (12) mit Hauptwelle (13), Getriebe (14) und Drehmomentstütze (15),
- der Generator (16) mit Frequenzumformer (17), und
- der Azimuthantrieb (18)
gehören.

8. Verfahren nach Anspruch 7,
**dadurch gekennzeichnet,**
**dass** mittels Änderungen von Schwingungsverhalten eines Teilsystems Beschädigungen an dem Teilsystem diagnostiziert werden und mit Hilfe statistischer Methoden basierend auf den Messergebnissen der Sensorik auf eine Restlebensdauer der Windenergieanlage geschlossen wird.

9. Verfahren nach einem der Ansprüche 7 oder 8,
**dadurch gekennzeichnet,**
**dass** die durch die Sensorik (6) erfassten Zustandsgrößen einer Systemanalyse (7) unterworfen werden.

10. Verfahren nach einem der Ansprüche 7 bis 9,
**dadurch gekennzeichnet,**
**dass** die durch die Sensorik (6) erfassten Zustandsgrößen und Ergebnisse einer Systemanalyse (7) einem Informationsmodul (21) zugeführt werden.

## Claims

1. Management system for a wind energy installation (2) having at least one controller (3) which allows coordination of component modules (4), and/or modules for load reduction of the wind energy installation (2) with oscillation damping modules (5), with a sensor system (6) providing data relating to the operating states of the component modules (4) for a system analysis (7), detecting reactive oscillations and/or loads and/or predictive prognosis of oscillations and/or loads of and/or on the wind energy installation (2) as well as predictive disturbance variables, and activating the oscillation damping modules (5) in the controller (3), and with an actuator system (8) carrying out damping measures and/or load reduction measures on the component modules (4) on the basis of the oscillation damping modules (5) of the controller (3),
**characterized**
**in that** the management system (1) provides communications between a plurality of controllers for subsystems and via a central controller (3), the sensors in the sensor system (6) are associated with individual controllers for subsystems and/or the central controller (3) for the management system (1) and the management system (1) has subsystems of a plurality of component modules (4) with autonomous damping functions, between which the management system (1) distributes damping measures and/or load reduction measures, with the subsystems including
- the rotor (9) with variable-pitch rotor blades (10) and a rotor hub (11),
- the drive train (12) with the main shaft (13), the gearbox (14) and torque support (15),
- the generator (16) with a frequency converter (17), and/or
- the azimuth drive (18).

2. Management system according to Claim 1,
**characterized**
**in that** the management system (1) has a plurality of controllers for coordination of component modules (4) of the wind energy installation (2) with oscillation damping modules (5) and/or load reduction modules.

3. Management system according to Claim 1 or Claim 2,
**characterized**
**in that** the sensor system (6) has wind field sensors, blade load sensors, main shaft load sensors, torque sensors, working material sensors, acceleration sensors and sensors for electrical variables of the generator, of the frequency converter and of the grid.

4. Management system according to one of the preceding claims,
**characterized**
**in that** the sensor system (6) for the management system (1) has multidimensional acceleration sensors, orientation sensors and/or angle sensors for detection of the operating states of the component modules (4), of reactive oscillations and/or loads and/or predictive prognosis of oscillations and/or loads of and/or on the component modules (4) of the wind energy installation (2), and for detection of predictive disturbance variables.

5. Management system according to one of the preceding claims,
**characterized**
**in that** the management system (1) has a diagnosis device for diagnosis and recording of state data of components, component modules (4) and/or subsystems of the wind energy installation (2).

6. Management system according to one of the preceding claims,
**characterized**
**in that** the actuator system (8) has active torque support (15), a pitch drive (19), a frequency converter (17), an azimuth drive (18) and/or an ABS soft brake (20).

7. Method using the management system (1) according to one of the preceding claims, with the method having the following method steps:
- detection of data relating to the operating states of the components (4) with respect to reactive oscillations and/or loads and/or predictive prognosis of oscillations and/or loads of and/or on the wind energy installation, and with respect to predictive disturbance variables;
- activation of actuators (8) for damping and/or load reduction of acute or predicted oscillation states of component modules (4) and/or of subsystems of the wind energy installation (2);
- generation of electrical energy with matching to the frequency, current and voltage demand of the downstream grid;
**characterized**
**in that**, if an oscillation damping function of a subsystem fails, the oscillation damping functions are distributed between remaining subsystems or component modules (4), with the subsystems including
- the rotor (9) with variable-pitch rotor blades (10) and a rotor hub (11),
- the drive train (12) with the main shaft (13), the gearbox (14) and torque support (15),
- the generator (16) with a frequency converter (17), and
- the azimuth drive (18).

8. Method according to Claim 7,
**characterized**
**in that** damage to a subsystem is diagnosed by means of changes in the oscillation behavior of the subsystem, and a remaining life of the wind energy installation is deduced with the aid of statistical methods based on the measurement results from the sensor system.

9. Method according to either of Claims 7 and 8,
**characterized**
**in that** the state variables detected by the sensor system (6) are subjected to system analysis (7).

10. Method according to one of Claims 7 to 9,
**characterized**
**in that** the state variables detected by the sensor system (6) and results of system analysis (7), are supplied to an information module (21).

## Revendications

1. Système de conduite de l'exploitation d'un aérogénérateur (2), comprenant au moins un contrôleur (3) qui permet une coordination de modules de composants (4) ou de modules servant à réduire la charge de l'aérogénérateur (2) avec des modules d'amortissement des vibrations (5), un dispositif de détection (6) délivrant des données des états opérationnels des modules de composants (4) pour une analyse du système (7), détectant des vibrations ou des charges réactives et/ou des prévisions prédictives des vibrations ou des charges de l'aérogénérateur (2) ainsi que des grandeurs perturbatrices prédictives et activant les modules d'amortissement des vibrations (5) dans le contrôleur (3), et un dispositif d'actionnement (8) accomplissant des mesures d'amortissement ou des mesures de réduction de charge sur les modules de composants (4) d'après les indications des modules d'amortissement des vibrations (5) du contrôleur (3),
**caractérisé en ce**
**que** le système de conduite d'exploitation (1) prévoit une communication de plusieurs contrôleurs de systèmes partiels entre eux ainsi que par le biais d'un contrôleur central (3), les détecteurs du dispositif de détection (6) sont associés aux contrôleurs individuels des systèmes partiels et/ou au contrôleur central (3) du système de conduite d'exploitation (1) et le système de conduite d'exploitation (1) possède plusieurs modules de composants (4) ayant des fonctions d'amortissement autonomes sur lesquels le système de conduite d'exploitation (1) distribue les mesures d'amortissement ou les mesures de réduction de charge,
- le rotor (9), comprenant des pales de rotor (10) positionnables et un moyeu de rotor (11),
- la chaîne cinématique (12), comprenant un arbre principal (13), une boîte de transmission (14) et un support de couple (15),
- le générateur (16), comprenant un convertisseur de fréquence (17) et/ou
- le mécanisme d'entraînement azimutal (18) faisant partie des systèmes partiels.

2. Système de conduite de l'exploitation selon la revendication 1, **caractérisé en ce que** le système de conduite de l'exploitation (1) possède plusieurs contrôleurs destinés à la coordination des modules de composants (4) de l'aérogénérateur (2) avec les modules d'amortissement des vibrations (5) ou les modules de réduction de charge.

3. Système de conduite de l'exploitation selon la revendication 1 ou la revendication 2, **caractérisé en ce que** le dispositif de détection (6) possède des détecteurs de parc éolien, des détecteurs de charge de pale, des détecteurs de charge d'arbre principal, des détecteurs de couple, des détecteurs de substance opérationnelle, des détecteurs d'accélération ainsi que des détecteurs de grandeurs électriques du générateur, du convertisseur de fréquence et du réseau.

4. Système de conduite de l'exploitation selon l'une des revendications précédentes, **caractérisé en ce que** le dispositif de détection (6) du système de conduite de l'exploitation (1) possède des détecteurs d'accélération multidimensionnels, des détecteurs de position et/ou des détecteurs d'angle destinés à détecter les états opérationnels des modules de composants (4), les vibrations relatives ou les charges et/ou les prévisions prédictives des vibrations ou des charges des modules de composants (4) de l'aérogénérateur (2), ainsi que pour détecter des grandeurs perturbatrices prédictives.

5. Système de conduite de l'exploitation selon l'une des revendications précédentes, **caractérisé en ce que** le système de conduite de l'exploitation (1) possède un dispositif de diagnostic destiné à diagnostiquer et à enregistrer des données d'état des composants, modules de composants (4) et/ou systèmes partiels de l'aérogénérateur (2).

6. Système de conduite de l'exploitation selon l'une des revendications précédentes, **caractérisé en ce que** le dispositif d'actionnement (8) possède un support de couple actif (15), un mécanisme d'entraînement du pas (19), un convertisseur de fréquence (17), un mécanisme d'entraînement azimutal (18) et/ou un frein intelligent ABS (20).

7. Procédé employant le système de conduite de l'exploitation (1) selon l'une des revendications précédentes, le procédé comprenant les étapes suivantes :
- détection de données des états opérationnels des modules de composants (4) en rapport avec des vibrations ou des charges réactives et/ou des prévisions prédictives des vibrations ou des charges de l'aérogénérateur, ainsi qu'en rapport avec des grandeurs perturbatrices prédictives ;
- activation d'actionneurs (8) destinés à l'amortissement et/ou à la réduction de charge d'états de vibrations aigus ou prédits des modules de composants (4) et/ou de systèmes partiels de l'aérogénérateur (2) ;
- génération d'énergie électrique avec adaptation au besoin en fréquence, en courant et en tension du réseau branché en aval ;
**caractérisé en ce**
**qu'**en cas de panne d'une fonction d'amortissement des vibrations d'un système partiel, les fonctions d'amortissement des vibrations sont distribuées sur les systèmes partiels ou les modules de composants (4) restants,
- le rotor (9), comprenant des pales de rotor (10) positionnables et un moyeu de rotor (11),
- la chaîne cinématique (12), comprenant un arbre principal (13), une boîte de transmission (14) et un support de couple (15),
- le générateur (16), comprenant un convertisseur de fréquence (17) et
- le mécanisme d'entraînement azimutal (18) faisant partie des systèmes partiels.

8. Procédé selon la revendication 7, **caractérisé en ce que** les dommages à un système partiel sont diagnostiqués au moyen des modifications du comportement vibratoire du système partiel et une durée de vie restante de l'aérogénérateur est déduite à l'aide de méthodes statistiques en se basant sur les résultats des mesures du dispositif de détection.

9. Procédé selon la revendication 7 ou 8, **caractérisé en ce que** les grandeurs d'état détectées par le dispositif de détection (6) sont soumises à une analyse du système (7).

10. Procédé selon l'une des revendications 7 à 9, **caractérisé en ce que** les grandeurs d'état détectées par le dispositif de détection (6) et les résultats d'une analyse du système (7) sont acheminés à un module d'information (21).
